# EUROPÄISCHE PATENTANMELDUNG

(11) **EP 3 575 619 A1**
(43) Veröffentlichungstag der Anmeldung: **04.12.2019**
(21) Anmeldenummer: 19171482.3
(22) Anmeldetag: 29.04.2019
(51) Int. Cl.: F16C 11/06, F16C 11/08

(54) **KUGELGELENK**

(30) Priorität: 29.05.2018 DE 102018208475
(71) Anmelder: ZF Friedrichshafen AG, 88046 Friedrichshafen (DE)
(72) Erfinder: Wulf, Markus, 32479 Hille (DE)

(57) **Zusammenfassung**

Kugelgelenk mit einem eine Zapfenöffnung (2) und einen Innenraum (3) umfassenden Gehäuse (4), einem eine Gelenkkugel (6) und einen fest mit dieser verbundenen Zapfen (7) umfassenden Kugelzapfen (8), dessen Gelenkkugel (6) drehbeweglich in dem Innenraum (3) des Gehäuses (4) gelagert ist, durch dessen Zapfenöffnung (2) sich der Kugelzapfen (8) aus dem Gehäuse (4) heraus erstreckt, und einem zwischen dem Gehäuse (4) und dem Kugelzapfen (8) angeordneten und sowohl an dem Gehäuse (4) als auch an dem Kugelzapfen (8) abgestützten Elastomerkörper (13), der durch eine Bewegung des Kugelzapfens (8) relativ zu dem Gehäuse (4) elastisch verformbar ist.

## Beschreibung

Die Erfindung betrifft ein Kugelgelenk mit einem eine Zapfenöffnung und einen Innenraum umfassenden Gehäuse und einem eine Gelenkkugel und einen fest mit dieser verbundenen Zapfen umfassenden Kugelzapfen, dessen Gelenkkugel drehbeweglich in dem Innenraum des Gehäuses gelagert ist, durch dessen Zapfenöffnung sich der Kugelzapfen aus dem Gehäuse heraus erstreckt.

Ein derartiges Kugelgelenk ist aus dem Stand der Technik bekannt und wird z.B. zum gelenkigen Verbinden von Fahrzeugbauteilen im Fahrwerk eines Kraftfahrzeugs eingesetzt. In der Regel ist der Kugelzapfen relativ zu dem Gehäuse frei drehbar und/oder auslenkbar, wobei eine maximale Auslenkung z.B. durch einen Anschlag definiert ist, der insbesondere durch einen die Zapfenöffnung begrenzenden Rand des Gehäuses gegeben ist. Zur Eigenzentrierung von Spurstangen und/oder Pendelstützen kann es aber wünschenswert sein, wenn der Kugelzapfen ohne äußere Krafteinwirkung auf das Kugelgelenk eine vorgegebene Stellung relativ zu dem Gehäuse annimmt oder in einen vorgegebenen Bereich seines Bewegungsraumes eintritt.

Ausgehend hiervon liegt der Erfindung die Aufgabe zugrunde, ein Kugelgelenk zu schaffen, bei dem ohne äußere Krafteinwirkung der Kugelzapfen eine vorgegebene Stellung relativ zu dem Gehäuse annimmt und/oder in einen vorgegebenen Bereich seines Bewegungsraumes eintritt.

Diese Aufgabe wird durch ein Kugelgelenk nach Anspruch 1 gelöst. Bevorzugte Weiterbildungen des Kugelgelenks sind in den Unteransprüchen und in der nachfolgenden Beschreibung gegeben.

Das eingangs genannte Kugelgelenk mit einem eine Zapfenöffnung und einen Innenraum umfassenden Gehäuse und einem eine Gelenkkugel und einen fest mit dieser verbundenen Zapfen umfassenden Kugelzapfen, dessen Gelenkkugel drehbeweglich in dem Innenraum des Gehäuses gelagert ist, durch dessen Zapfenöffnung sich der Kugelzapfen aus dem Gehäuse heraus erstreckt, ist insbesondere dadurch weitergebildet, dass zwischen dem Gehäuse und dem Kugelzapfen ein sowohl an dem Gehäuse als auch an dem Kugelzapfen abgestützter Elastomerkörper angeordnet ist, der durch eine Bewegung des Kugelzapfens relativ zu dem Gehäuse elastisch verformbar ist.

Da der Elastomerkörper durch eine Bewegung des Kugelzapfens relativ zu dem Gehäuse elastisch verformbar ist, ist durch den elastisch verformten Elastomerkörper eine Kraft und/oder ein Drehmoment auf den Kugelzapfen, vorzugsweise in Richtung auf eine vorgegebene Stellung relativ zu dem Gehäuse und/oder in Richtung auf einen vorgegebenen Bereich des Bewegungsraumes des Kugelzapfens, ausübbar. Diese Kraft und/oder dieses Drehmoment wird z.B. auch als Rückstellkraft und/oder als Rückstellmoment bezeichnet. Der Bewegungsraum umfasst insbesondere alle möglichen und/oder erreichbaren Stellungen des Kugelzapfens relativ zu dem Gehäuse. Die oder eine vorgegebene Stellung des Kugelzapfens liegt insbesondere innerhalb des Bewegungsraums des Kugelzapfens. Die vorgegebene Stellung des Kugelzapfens wird z.B. auch als Neutralstellung und/oder als Ausgangsstellung bezeichnet.

Dem Kugelgelenk und/oder dem Gehäuse ist bevorzugt eine sich in einer axialen Richtung erstreckende Gelenklängsachse zugeordnet. Die Gelenklängsachse wird insbesondere auch als Gehäuselängsachse bezeichnet. Vorteilhaft verläuft die Gelenklängsachse durch den Mittelpunkt der Gelenkkugel. Eine oder jedwede quer zur axialen Richtung und/oder quer zur Gelenklängsachse verlaufende Richtung wird insbesondere als radiale Richtung bezeichnet. Bevorzugt verläuft die Gelenklängsachse mittig durch die Zapfenöffnung und/oder mittig durch das Gehäuse. Vorteilhaft verläuft die Gelenklängsachse senkrecht zu einer durch die Zapfenöffnung definierten Zapfenöffnungsfläche, die insbesondere eben ist. Die Zapfenöffnung und/oder die Zapfenöffnungsfläche ist vorzugsweise kreisförmig oder oval oder länglich oder als Langloch ausgebildet. Insbesondere geht die Zapfenöffnung in den Innenraum über und/oder die Zapfenöffnung mündet insbesondere in den Innenraum ein und/oder die Zapfenöffnung bildet einen Teil des Innenraums. Bevorzugt ist oder bildet das Gehäuse einen formstabilen Körper. Das Gehäuse besteht z.B. aus Kunststoff oder aus Metall. Beispielsweise besteht das Gehäuse aus Aluminium oder aus einem Eisenwerkstoff, wie z.B. Stahl.

Das Gehäuse umfasst bevorzugt einen, insbesondere der Zapfenöffnung gegenüberliegenden, Boden. Vorteilhaft ist der Boden fest und/oder starr mit dem Gehäuse verbunden und/oder der Boden bildet insbesondere einen Teil des Gehäuses. Der Boden ist z.B. einstückig und/oder materialhomogen mit dem Gehäuse ausgebildet. Alternativ ist der Boden z.B. durch einen an dem Gehäuse festgelegten Verschlussdeckel gebildet. Bevorzugt wird der Verschlussdeckel dem Gehäuse zugerechnet. Der Verschlussdeckel ist insbesondere ein formstabiler Körper. Vorzugsweise besteht der Verschlussdeckel aus Kunststoff oder aus Metall. Beispielsweise besteht der Verschlussdeckel aus Aluminium oder aus einem Eisenwerkstoff, wie z.B. Stahl.

Der Kugelzapfen ist insbesondere relativ zu dem Gehäuse bewegbar. Bevorzugt ist dem Kugelzapfen eine Zapfenlängsachse zugeordnet. Insbesondere verläuft die Zapfenlängsachse durch den Mittelpunkt der Gelenkkugel und/oder mittig durch den Kugelzapfen. Vorteilhaft erstreckt sich der Kugelzapfen in Richtung der Zapfenlängsachse. Bevorzugt ist der Kugelzapfen bezüglich der Zapfenlängsachse rotationssymmetrisch oder im Wesentlichen rotationssymmetrisch. Vorteilhaft ist die Gelenkkugel, insbesondere in Richtung der Zapfenlängsachse, an einem Ende des Zapfens und/oder des Kugelzapfens vorgesehen und/oder bildet, insbesondere in Richtung der Zapfenlängsachse, ein Ende des Kugelzapfens. Die Gelenkkugel wird beispielsweise auch als Kopf oder Kugelkopf des Kugelzapfens bezeichnet. Ein dem Zapfen abgewandter und/oder gegenüberliegender Bereich oder Oberflächenbereich der Gelenkgugel und/oder eine dem Zapfen abgewandte und/oder gegenüberliegende Seite oder Oberfläche der Gelenkgugel wird vorzugsweise als Pol oder Polfläche bezeichnet. Vorteilhaft ist die Polfläche abgeflacht und/oder eben. Dies kann aus fertigungstechnischen Gründen sinnvoll sein. Alternativ bildet die Polfläche z.B. einen Bereich oder einen Teil der Kugelfläche der Gelenkkugel. Insbesondere verläuft die Zapfenlängsachse mittig durch die Polfläche und/oder senkrecht zu der Polfläche. Vorteilhaft ist der Zapfen starr mit der Gelenkkugel verbunden. Beispielsweise ist der Kugelzapfen einstückig und/oder materialhomogen ausgebildet. Alternativ bilden der Zapfen und die Gelenkkugel z.B. separate Körper, die miteinander zu dem Kugelzapfen gefügt sind. Bevorzugt bildet der Kugelzapfen einen formstabilen Körper. Vorteilhaft besteht der Kugelzapfen aus Kunststoff oder aus Metall. Beispielsweise besteht der Kugelzapfen aus Aluminium oder aus einem Eisenwerkstoff, wie z.B. Stahl.

Bevorzugt ist, insbesondere ohne äußere Krafteinwirkung, der Kugelzapfen durch den elastisch verformten Elastomerkörper relativ zu dem Gehäuse bewegbar und/oder in die oder eine vorgegebene Stellung relativ zu dem Gehäuse und/oder in den oder einen vorgegebenen Bereich seines Bewegungsraumes bewegbar und/oder zurück bewegbar und/oder stellbar und/oder zurückstellbar. Vorteilhat ist der Elastomerkörper elastisch oder federelastisch. Vorzugsweise bildet der Elastomerkörper eine Feder. Bevorzugt weist der Elastomerkörper und/oder die Feder eine derartige Steifigkeit oder Federsteifigkeit auf, dass, insbesondere ohne äußere Krafteinwirkung, der Kugelzapfen durch den elastisch verformten Elastomerkörper relativ zu dem Gehäuse bewegbar und/oder in die oder eine vorgegebene Stellung relativ zu dem Gehäuse und/oder in den oder einen vorgegebenen Bereich seines Bewegungsraumes bewegbar und/oder zurück bewegbar und/oder stellbar und/oder zurückstellbar ist. Unter einer äußeren Krafteinwirkung wird insbesondere eine Krafteinwirkung verstanden, die nicht von dem Kugelgelenk und/oder von einem Teil des Kugelgelenks und/oder von Teilen des Kugelgelenks selbst hervorgerufen wird. Der Elastomerkörper bildet vorzugsweise einen Teil des Kugelgelenks. Bevorzugt ist der Elastomerkörper nicht festhaftend mit dem Kugelzapfen verbunden. Vorteilhaft ist der Kugelzapfen relativ zu dem Elastomerkörper bewegbar. Beispielsweise liegt der Kugelzapfen beweglich oder gleitbeglich an dem Elstomerkörper an. Vorteilhaft ist der Elastomerkörper scheibenförmig oder ringförmig oder als Scheibe oder als Ring oder Ringscheibe ausgebildet. Bevorzugt ist der Elastomerkörper einstückig ausgebildet. Insbesondere besteht der Elastomerkörper aus einem Elastomer, wie z.B. Gummi.

Die oder eine oder jede Bewegung des Kugelzapfens relativ zu dem Gehäuse ist oder umfasst insbesondere eine Auslenkung des Kugelzapfens relativ zu dem Gehäuse und/oder eine Drehung des Kugelzapfens relativ zu dem Gehäuse um die Zapfenlängsachse. Bevorzugt ist der Kugelzapfen relativ zu dem Gehäuse auslenkbar und/oder um die Zapfenlängsachse relativ zu dem Gehäuse drehbar. Als Auslenken des Kugelzapfens wird insbesondere eine Veränderung des zwischen der Zapfenlängsachse und der Gelenklängsachse eingeschlossenen Winkels bezeichnet. Bevorzugt wird mit einer Auslenkung des Kugelzapfens eine Neigung der Zapfenlängsachse gegenüber der Gelenklängsachse bezeichnet. Eine Stellung des Kugelzapfens, in welcher die Zapfenlängsachse mit der Gelenklängsachse zusammenfällt, wird z.B. als Nulllage des Kugelzapfens bezeichnet. Die vorgegebene Stellung des Kugelzapfens ist z.B. durch die Nulllage gegeben oder definiert. Alternativ ist die vorgegebene Stellung des Kugelzapfens z.B. durch eine gegenüber der Nulllage ausgelenkte Stellung des Kugelzapfens gegeben oder definiert. Beispielsweise ist vorgegebene Stellung des Kugelzapfens durch eine vorgegebene Auslenkung des Kugelzapfens gegeben oder definiert. Ist oder wird der Kugelzapfen um seine Zapfenlängsachse relativ zu dem Gehäuse verdreht oder gedreht, so wird diese Verdrehung oder dieses Drehen insbesondere als Verdrehung oder als Orientierung oder als Drehen oder als Verdrehen oder als Orientieren des Kugelzapfens bezeichnet. Eine und/oder eine vorgegebene Orientierung oder Drehstellungen des Kugelzapfens bezüglich seiner Zapfenlängsachse wird z.B. als Nullorientierung des Kugelzapfens bezeichnet. Beispielsweise ist vorgegebene Stellung des Kugelzapfens durch die Nullorientierung oder zusätzlich durch die Nullorientierung gegeben oder definiert.

Das oder ein von dem elastisch verformten Elastomerkörper auf den Kugelzapfen ausgeübte oder ausübbare Drehmoment (Rückstellmoment) wirkt insbesondere um eine oder wenigstens eine quer zur Zapfenlängsachse und durch den Mittelpunkt der Gelenkkugel verlaufende Achse oder Gerade und/oder um die Zapfenlängsachse.

Gemäß einer Weiterbildung liegen oder stehen der Kugelzapfen und der Elastomerkörper aneinander an und/oder miteinander in Kontakt. Beispielsweise liegen oder stehen der Kugelzapfen und der Elastomerkörper unter Zwischenschaltung eines oder wenigstens eines, vorzugsweise inneren, Zwischenelements aneinander an und/oder miteinander in Kontakt. Bevorzugt liegen oder stehen der Kugelzapfen und der Elastomerkörper aber unmittelbar oder direkt aneinander an und/oder miteinander in Kontakt. Somit kann auf das oder das wenigstens eine, vorzugsweise innere, Zwischenelement verzichtet werden, wodurch insbesondere der Herstellungsaufwand reduzierbar ist.

Gemäß einer Ausgestaltung liegen oder stehen das Gehäuse und der Elastomerkörper aneinander an und/oder miteinander in Kontakt. Beispielsweise liegen oder stehen das Gehäuse und der Elastomerkörper unter Zwischenschaltung eines oder wenigstens eines, vorzugsweise äußeren, Zwischenelements aneinander an und/oder miteinander in Kontakt. Bevorzugt liegen oder stehen das Gehäuse und der Elastomerkörper aber unmittelbar oder direkt aneinander an und/oder miteinander in Kontakt. Somit kann auf das oder das wenigstens eine, vorzugsweise äußere, Zwischenelement verzichtet werden, wodurch insbesondere der Herstellungsaufwand reduzierbar ist.

Gemäß einer Weiterbildung ist der Elastomerkörper in dem Gehäuse und/oder in dem Innenraum angeordnet. Hierdurch kann der Elastomerkörper durch das Gehäuse vor äußeren Einflüssen geschützt werden. Ferner ergibt sich somit eine kompakte Bauweise. Bevorzugt ist der Elastomerkörper zwischen dem Kugelzapfen und einer den Innenraum begrenzenden Wand oder Wandung des Gehäuses angeordnet. Vorteilhaft erstreckt sich der Elastomerkörper zwischen dem Kugelzapfen und der oder einer den Innenraum begrenzenden Wand oder Wandung des Gehäuses, vorzugsweise in axialer oder in radialer Richtung. Die Wand oder Wandung des Gehäuses umfasst z.B. den Boden und/oder eine den Innenraum umringende Wand oder Wandung des Gehäuses und/oder eine die Zapfenöffnung umringende Wand oder Wandung des Gehäuses. Beispielsweise ist die Wand oder Wandung des Gehäuses durch den Boden und/oder durch die oder eine den Innenraum umringende Wand oder Wandung des Gehäuses und/oder durch die oder eine die Zapfenöffnung umringende Wand oder Wandung des Gehäuses gebildet.

Gemäß einer Ausgestaltung erstreckt sich der Zapfen oder der Kugelzapfen durch den Elastomerkörper hindurch. Vorteilhaft umringt der Elastomerkörper den Zapfen oder Kugelzapfen, vorzugsweise vollständig. In diesem Fall ist der Elastomerkörper insbesondere ringförmig oder als Ring oder Ringescheibe ausgebildet, durch dessen oder deren Ringöffnung sich der Zapfen oder der Kugelzapfen hindurch erstreckt. Bevorzugt ist der Elastomerkörper zwischen dem Zapfen oder dem Kugelzapfen und dem Gehäuse, insbesondere zwischen dem Zapfen oder dem Kugelzapfen und der oder einer die Zapfenöffnung begrenzenden Wand oder Wandung des Gehäuses angeordnet. Vorteilhaft erstreckt sich der Elastomerkörper von dem Zapfen oder dem Kugelzapfen bis zu dem Gehäuse, insbesondere von dem Zapfen oder dem Kugelzapfen bis zu der oder einer die Zapfenöffnung begrenzenden Wand oder Wandung des Gehäuses, vorzugsweise in radialer Richtung. Die Ringöffnung ist z.B. rund oder als Langloch ausgebildet.

Gemäß einer Weiterbildung ist der Elastomerkörper, insbesondere in axialer Richtung, zwischen der Gelenkkugel und dem Boden des Gehäuses angeordnet. Vorteilhaft erstreckt sich der Elastomerkörper, insbesondere in axialer Richtung, von der Gelenkkugel bis zu dem Boden des Gehäuses. Beispielsweise liegt der Elastomerkörper und/oder die oder eine der Gelenkkugel zugewandte Oberfläche des Elastomerkörpers, vorzugsweise unmittelbar oder direkt, an der Gelenkkugel an. Alternativ weist der Elastomerkörper und/oder die oder eine der Gelenkkugel zugewandte Oberfläche des Elastomerkörpers zu der Gelenkkugel z.B. einen, insbesondere axialen, Abstand auf. Vorteilhaft liegt der Elastomerkörper, vorzugsweise unmittelbar oder direkt, an dem Boden des Gehäuses an.

Bevorzugt ist der Elastomerkörper, insbesondere in axialer Richtung, zwischen der oder einer dem Zapfen abgewandten und/oder dem Elastomerkörper zugewandten Seite der Gelenkkugel und dem Boden des Gehäuses angeordnet. Beispielsweise erstreckt sich der Elastomerkörper, insbesondere in axialer Richtung, von der dem Zapfen abgewandten und/oder dem Elastomerkörper zugewandten Seite der Gelenckugel bis zu dem Boden des Gehäuses. Vorzugsweise liegt der Elastomerkörper an der dem Zapfen abgewandten und/oder dem Elastomerkörper zugewandten Seite der Gelenkkugel an. Alternativ weist der Elastomerkörper zu der dem Zapfen abgewandten und/oder dem Elastomerkörper zugewandten Seite der Gelenkkugel einen, insbesondere axialen, Abstand auf. Vorteilhaft liegt der Elastomerkörper, vorzugsweise unmittelbar oder direkt, an dem Boden des Gehäuses an. Insbesondere bildet die dem Zapfen abgewandte und/oder dem Elastomerkörper zugewandte Seite der Gelenkkugel die oder eine Polfläche der Gelenkkugel.

Vorteilhaft ist die Gelenkkugel an der oder einer dem Zapfen abgewandten und/oder dem Elastomerkörper zugewandten Seite abgeflacht. Die abgeflachte Seite der Gelenkkugel ist vorzugsweise eben. Bevorzugt verläuft die Zapfenlängsachse mittig durch die abgeflachte Seite und/oder senkrecht zu der abgeflachten Seite. Vorzugsweise liegt die Gelenkkugel mit der abgeflachten Seite, beispielsweise vollflächig, an dem Elastomerkörper und/oder an der oder einer, insbesondere der Gelenkkugel zugewandten, Oberfläche des Elastomerkörpers an, die vorzugsweise eben ist. Alternativ weist der Elastomerkörper und/oder die oder eine, insbesondere der Gelenkkugel zugewandte, Oberfläche des Elastomerkörpers zu der abgeflachten Seite der Gelenkkugel z.B. einen, insbesondere axialen, Abstand auf. Vorteilhaft liegt der Elastomerkörper, vorzugsweise unmittelbar oder direkt, an dem Boden des Gehäuses an. Insbesondere bildet die abgeflachte Seite der Gelenkkugel die oder eine Polfläche der Gelenkkugel.

Gemäß einer Ausgestaltung weist die Gelenkkugel an der oder einer dem Zapfen abgewandten und/oder dem Elastomerkörper zugewandten Seite oder an ihrer Polfläche einen Vorsprung auf, der in eine in dem Elastomerkörper vorgesehene Ausnehmung eingreift. Bevorzugt erstreckt sich der Vorsprung in Richtung der Zapfenlängsachse und/oder der Vorsprung steht vorzugsweise in Richtung der Zapfenlängsachse, insbesondere von der dem Zapfen abgewandten und/oder dem Elastomerkörper zugewandten Seite der Gelenkkugel oder von der Polfläche und/oder von der Gelenkkugel, vor. Die Ausnehmung erstreckt sich bevorzugt in axialer Richtung und/oder in Richtung der Gelenklängsachse, insbesondere in den Elastomerkörper hinein. Vorteilhaft ist der Vorsprung fest, insbesondere starr, mit der Gelenkkugel und/oder dem Kugelzapfen verbunden. Beispielsweise ist der Vorsprung einstückig und/oder materialhomogen mit der Gelenkkugel und/oder dem Kugelzapfen ausgebildet und/oder durch das Material des Kugelzapfens und/oder Gelenkkugel gebildet. Der Vorsprung ist vorzugsweise ein formstabiler Körper. Vorteilhaft besteht der Vorsprung aus Kunststoff oder aus Metall. Beispielsweise besteht der Vorsprung aus Aluminium oder aus einem Eisenwerkstoff, wie z.B. Stahl.

Gemäß einer alternativen Ausgestaltung weist die Gelenkkugel an der oder einer dem Zapfen abgewandten und/oder dem Elastomerkörper zugewandten Seite oder an oder in ihrer Polfläche eine Ausnehmung auf, in die ein an dem Elastomerkörper vorgesehener Vorsprung eingreift. Die Ausnehmung erstreckt sich vorzugsweise in Richtung der Zapfenlängsachse, insbesondere in die Gelenkkugel hinein. Bevorzugt erstreckt sich der Vorsprung in axialer Richtung und/oder in Richtung der Gelenklängsachse und/oder der Vorsprung steht vorzugsweise in axialer Richtung und/oder in Richtung der Gelenklängsachse, insbesondere von dem Elastomerkörper und/oder von der oder einer der Gelenkkugel zugewandten Oberfläche des Elastomerkörpers, vor. Der Vorsprung ist vorzugsweise fest mit dem Elastomerkörper verbunden. Beispielsweise ist der Vorsprung einstückig und/oder materialhomogen mit dem Elastomerkörper ausgebildet und/oder durch das Material des Elastomerkörpers gebildet. Vorteilhat ist der Vorsprung elastisch oder federelastisch. Beispielsweise besteht der Vorsprung aus einem Elastomer, wie z.B. Gummi.

Gemäß einer Weiterbildung liegen oder stehen der Kugelzapfen und der Elastomerkörper im Bereich des Vorsprungs und/oder mittels des Vorsprungs aneinander an und/oder miteinander in Kontakt. Beispielsweise liegen oder stehen der Kugelzapfen und der Elastomerkörper im Bereich des Vorsprungs unter Zwischenschaltung des oder des wenigstens einen, vorzugsweise inneren, Zwischenelements aneinander an und/oder miteinander in Kontakt. Bevorzugt liegen oder stehen der Kugelzapfen und der Elastomerkörper im Bereich des Vorsprungs und/oder mittels des Vorsprungs aber unmittelbar oder direkt aneinander an und/oder miteinander in Kontakt.

Gemäß einer Ausgestaltung liegen oder stehen eine Umfangsfläche des Vorsprungs und eine die Ausnehmung begrenzende Umfangsfläche aneinander an und/oder miteinander in Kontakt. Beispielsweise liegen oder stehen die oder eine Umfangsfläche des Vorsprungs und die oder eine die Ausnehmung begrenzende Umfangsfläche unter Zwischenschaltung des oder des wenigstens einen, vorzugsweise inneren, Zwischenelements aneinander an und/oder miteinander in Kontakt. Bevorzugt liegen oder stehen die oder eine Umfangsfläche des Vorsprungs und die oder eine die Ausnehmung begrenzende Umfangsfläche aber unmittelbar oder direkt aneinander an und/oder miteinander in Kontakt.

Der Vorsprung und/oder die oder eine Umfangsfläche des Vorsprungs ist z.B. rund oder unrund ausgebildet. Beispielsweise ist der Vorsprung zylindrisch, kreiszylindrisch, halbzylindrisch, teilzylindrisch, würfelförmig oder quaderförmig ausgebildet. Vorteilhaft ist der Vorsprung und/oder dessen Umfangsfläche und/oder dessen Kontur oder Umfangskontur, vorzugsweise im Querschnitt, kreisförmig, halbkreisförmig, teilkreisförmig, oval, länglich, elliptisch, quadratisch, rechteckig, viereckig oder mehreckig ausgebildet. Bevorzugt ist der Vorsprung stiftförmig oder als Stift ausgebildet. Die Ausnehmung und/oder die oder eine die Ausnehmung begrenzende Umfangsfläche ist z.B. rund oder unrund ausgebildet. Beispielsweise ist die Ausnehmung zylindrisch, kreiszylindrisch, halbzylindrisch, teilzylindrisch, würfelförmig oder quaderförmig ausgebildet. Vorteilhaft ist die Ausnehmung und/oder die die Ausnehmung begrenzende Umfangsfläche und/oder die Kontur oder Umfangskontur der Ausnehmung, vorzugsweise im Querschnitt, kreisförmig, halbkreisförmig, teilkreisförmig, oval, länglich, elliptisch, quadratisch, rechteckig, viereckig oder mehreckig ausgebildet. Durch die Formgebung und/oder die Anordnung der Ausnehmung und/oder des Vorsprungs kann insbesondere erreicht werden, dass eine durch den Vorsprung hervorgerufene elastische Verformung des Elastomerkörpers und somit auch das Rückstellmoment in unterschiedlichen Richtungen gleich oder unterschiedlich ist.

Die Ausnehmung ist bevorzugt eine Vertiefung und/oder eine Nut oder ein Durchgangsloch. Beispielsweise ist die Ausnehmung eine in die dem Zapfen abgewandte und/oder dem Elastomerkörper zugewandte Seite der Gelenkkugel oder in die Polfläche eingebrachte Vertiefung und/oder Nut. Alternativ ist die Ausnehmung z.B. eine in den Elastomerkörper oder in die oder eine, vorzugsweise der Gelenkkugel und/oder dem Kugelzapfen zugewandte, Oberfläche des Elastomerkörpers eingebrachte Vertiefung und/oder Nut. Ist der Elastomerkörper ringförmig oder als Ring oder Ringscheibe ausgebildet, bildet die Ausnehmung z.B. die Ringöffnung des Elastomerkörpers.

Die Abmessungen der Ausnehmung und/oder die Abmessungen der die Ausnehmung begrenzenden Umfangsfläche sind z.B. an die Abmessungen des Vorsprungs und/oder an die Abmessungen der Umfangsfläche des Vorsprungs angepasst. In diesem Fall führt insbesondere jede Auslenkung des Kugelzapfens zu einer elastischen Verformung des Elastomerkörpers. Gemäß einer Alternative sind die Abmessungen der Ausnehmung und/oder die Abmessungen der die Ausnehmung begrenzenden Umfangsfläche z.B. in einer oder wenigstens einer Richtung größer als die Abmessungen des Vorsprungs und/oder als die Abmessungen der Umfangsfläche des Vorsprungs. In diesem Fall ist z.B. eine Auslenkung des Kugelzapfens, insbesondere in der oder der wenigstens einen Richtung, möglich, ohne dass der Vorsprung an die oder eine die Ausnehmung begrenzende Umfangsfläche oder Wandung anstößt.

Gemäß einer Weiterbildung ist die Form und/oder die Kontur oder Umfangskontur der Ausnehmung an die Form und/oder die Kontur oder Umfangskontur des Vorsprungs angepasst oder näherungsweise angepasst. Beispielsweise entspricht die Form und/oder die Kontur oder Umfangskontur der Ausnehmung, vorzugsweise näherungsweise oder zumindest näherungsweise, der Form und/oder der Kontur oder Umfangskontur des Vorsprungs. Ein geringfügiges Spiel des Vorsprungs in der Ausnehmung kann z.B. vorhanden sein. Beispielsweise sind die Abmessungen der Ausnehmung größer oder geringfügig größer als die Abmessungen des Vorsprungs. Der Vorsprung greift z.B. unter Ausbildung einer Spielpassung oder Übergangspassung in die Ausnehmung ein. Bevorzugt liegt der Vorsprung mit seiner Umfangsfläche vollständig oder teilweise oder zumindest teilweise an der oder einer die Ausnehmung begrenzenden Umfangsfläche an. Vorteilhaft führt, insbesondere somit, eine oder jede Auslenkung des Kugelzapfens zu einer elastischen Verformung des Elastomerkörpers. Beispielsweise ist der Vorsprung rund und/oder der Vorsprung und/oder die oder eine Umfangsfläche des Vorsprungs und/oder die oder eine Kontur oder Umfangskontur des Vorsprungs ist z.B. zu der Zapfenlängsachse und/oder zu der Gelenklängsachse rotationssymmetrisch und/oder die Ausnehmung ist z.B. rund und/oder die Ausnehmung und/oder die oder eine die Ausnehmung begrenzende Umfangsfläche und/oder die oder eine Kontur oder Umfangskontur der Ausnehmung ist z.B. zu der Zapfenlängsachse und/oder zu der Gelenklängsachse rotationssymmetrisch. Bevorzugt ist der Kugelzapfen, insbesondere in diesem Fall, vorzugsweise frei, um seine Zapfenlängsachse drehbar. Alternativ ist der Vorsprung z.B. unrund und/oder der Vorsprung und/oder die oder eine Umfangsfläche des Vorsprungs und/oder die oder eine Kontur oder Umfangskontur des Vorsprungs ist z.B. zu der Zapfenlängsachse und/oder zu der Gelenklängsachse nicht rotationssymmetrisch und/oder der Vorsprung weist zu der Zapfenlängsachse und/oder zu der Gelenklängsachse einen Versatz oder Abstand auf und/oder der Vorsprung ist exzentrisch zu der Zapfenlängsachse und/oder zu der Gelenklängsachse angeordnet und/oder die Ausnehmung ist z.B. unrund und/oder die Ausnehmung und/oder die oder eine die Ausnehmung begrenzende Umfangsfläche und/oder die oder eine Kontur oder Umfangskontur der Ausnehmung ist z.B. zu der Zapfenlängsachse und/oder zu der Gelenklängsachse nicht rotationssymmetrisch und/oder die Ausnehmung weist zu der Zapfenlängsachse und/oder zu der Gelenklängsachse einen Versatz oder Abstand auf und/oder die Ausnehmung ist exzentrisch zu der Zapfenlängsachse und/oder zu der Gelenklängsachse angeordnet. Beispielsweise greift der Vorsprung, insbesondere bezüglich einer Drehung des Kugelzapfens um die Zapfenlängsachse, formschlüssig in die Ausnehmung ein und/oder der Vorsprung ist beispielsweise, insbesondere bezüglich einer Drehung des Kugelzapfens um die Zapfenlängsachse, formschlüssig mit der Ausnehmung und/oder mit der oder einer die Ausnehmung begrenzenden Wandung verbunden und/oder formschlüssig in der Ausnehmung gesichert. Bevorzugt ist, insbesondere in diesem Fall, durch eine Drehung des Kugelzapfens um seine Zapfenlängsachse ein Drehmoment von dem Kugelzapfen auf den Elastomerkörper übertragbar. Vorteilhaft ist, insbesondere in diesem Fall, der Elastomerkörper durch eine Drehung des Kugelzapfens um seine Zapfenlängsachse elastisch verformbar.

Gemäß einer Ausgestaltung ist die Ausnehmung als eine sich in einer Führungsrichtung erstreckende Nut ausgebildet. Die Nut wird z.B. auch als Führungsnut bezeichnet. Vorteilhaft ist der Vorsprung in der Nut und/oder entlang der Nut in Führungsrichtung, vorzugsweise bewegbar, geführt. Die Nut weist insbesondere eine Nutöffnung auf. Bevorzugt greift der Vorsprung durch die Nutöffnung in die Nut ein. Die Nut weist insbesondere zwei einander gegenüberliegende Nutwände auf und/oder ist insbesondere durch die Nutwände und/oder durch zwei einander gegenüberliegende Nutwände begrenzt. Bevorzugt begrenzen die Nutwände die Nutöffnung. Vorteilhaft liegen die Nutwände in einer quer zur Führungsrichtung verlaufenden Richtung einander gegenüber. Die quer zur Führungsrichtung verlaufende Richtung wird z.B. auch als Sperrrichtung oder Dämpfungsrichtung bezeichnet. Bei den Nutwänden handelt es sich z.B. um Wände oder Flächen des Elastomerkörpers oder des Kugelzapfens. Die Nut weist insbesondere einen Nutgrund auf und/oder ist insbesondere durch den Nutgrund und/oder durch einen Nutgrund begrenzt. Bevorzugt liegt der Nutgrund der Nutöffnung gegenüber. Bei dem Nutgrund handelt es sich z.B. um eine Wand oder Fläche des Elastomerkörpers oder des Kugelzapfens. Bevorzugt ist der Nutgrund um eine durch den Mittelpunkt der Gelenkkugel verlaufende Gerade gekrümmt, die vorzugsweise senkrecht zur Zapfenlängsachse verläuft. Alternativ ist der Nutgrund z.B. eben ausgebildet. Die Nut weist insbesondere zwei Nutenden, vorzugsweise in Führungsrichtung, auf. Bevorzugt liegen die Nutenden in Führungsrichtung einander gegenüber. Beispielsweise sind die Nutenden geschlossen oder offen ausgebildet. Bevorzugt liegt der Vorsprung mit einem oder wenigstens einem Anlagebereich seiner Umfangsfläche, vorzugsweise unmittelbar oder direkt, an wenigstens einer der Nutwände an. Beispielsweise liegt der Vorsprung mit zwei einander gegenüberliegenden Anlagebereichen seiner Umfangsfläche, vorzugsweise unmittelbar oder direkt, an den Nutwänden an. Vorteilhaft liegen die Anlagebereiche in Sperrrichtung oder Dämpfungsrichtung und/oder in der oder einer quer zur Führungsrichtung verlaufenden Richtung einander gegenüber.

Gemäß einer Ausgestaltung ist in dem Gehäuse und/oder in dem Innenraum eine Lagerschale angeordnet, in welcher der Kugelzapfen mit seiner Gelenkkugel, vorzugsweise gleitfähig und/oder beweglich, sitzt. Insbesondere ist der Kugelzapfen mit seiner Gelenkkugel gleitfähig und/oder beweglich in der Lagerschale gelagert. Bevorzugt ist der Elastomerkörper, vorzugsweise in axialer Richtung, in dem Innenraum zwischen der Lagerschale und dem Boden des Gehäuses angeordnet. Insbesondere umschließt die Lagerschale die Gelenkkugel, vorzugsweise zumindest teilweise. Die Lagerschale ist oder bildet z.B. eine Kugelschale. Bevorzugt umschließt die Lagerschlage die Gelenkkugel, insbesondere teilweise oder zumindest teilweise. Vorteilhaft umfasst die Lagerschale eine die Gelenkkugel umringende und an dieser anliegende, vorzugsweise teilkugelförmige, Lagerfläche. Die Lagerfläche ist bevorzugt in axialer Richtung auf beiden Seiten des Mittelpunkts der Gelenkkugel angeordnet und/oder verläuft vorzugsweise in axialer Richtung auf beiden Seiten des Mittelpunkts der Gelenkkugel und/oder liegt vorteilhaft auf beiden Seiten des Mittelpunkts der Gelenkkugel an der Gelenkkugel an. Insbesondere ist Lagerfläche bezüglich der Gelenklängsachse rotationssymmetrisch. Bevorzugt ist die Lagerschale bezüglich der Gelenklängsachse rotationssymmetrisch oder im Wesentlichen rotationssymmetrisch. Vorteilhaft bildet die Lagerschale einen formstabilen Körper. Beispielsweise besteht die Lagerschale aus Kunststoff.

Gemäß einer Weiterbildung erstreckt sich der Kugelzapfen und/oder Zapfen, insbesondere außerhalb des Gehäuses, durch einen Dichtungsbalg hindurch, der sich vorzugsweise von dem Gehäuse oder der Lagerschale bis zu dem Kugelzapfen oder dem Zapfen erstreckt. Vorteilhaft umringt der Dichtungsbalg das Gehäuse und/oder die Lagerschale und/oder den Kugelzapfen und/oder den Zapfen. Insbesondere ist der Dichtungsbalg außerhalb des Gehäuses angeordnet. Der Dichtungsbalg besteht bevorzugt aus einem elastischen Werkstoff, beispielsweise aus einem Elastomer, wie z.B. Gummi.

Das Kugelgelenk ist bevorzugt für ein Fahrzeug vorgesehen. Vorteilhaft ist oder wird das Kugelgelenk in das oder ein Fahrzeug eingebaut, insbesondere in ein Fahrwerk oder in eine Radaufhängung des Fahrzeugs. Der Kugelzapfen ist z.B. mit einem ersten Fahrzeugteil des oder eines Fahrzeugs verbunden oder verbindbar. Ferner ist das Gehäuse z.B. mit einem zweiten Fahrzeugteil des Fahrzeugs verbunden oder verbindbar. Bei den Fahrzeugteilen handelt es sich bevorzugt um Fahrwerkbauteile. Das Fahrzeug ist vorzugsweise ein Kraftfahrzeug.

Mit dem hier beschriebenen Kugelgelenk ist es insbesondere möglich, den Kugelzapfen in die oder eine vorgegebene Stellung und/oder in seine Ausgangslage zurückzustellen. Ferner ist es möglich, eine Vorspannung im eingebauten Zustand des Kugelgelenks herbeizuführen, beispielsweise dadurch, dass die vorgegebene Stellung des Kugelzapfens von der Nulllage abweicht. Durch den in die Ausnehmung eingreifenden Vorsprung ist oder sind z.B. ein Rückstellmoment um die Zapfenlängsachse und/oder unterschiedliche Rückstellmomente um unterschiedliche quer zur Zapfenlängsachse und durch den Mittelpunkt der Gelenkkugel verlaufende Achsen oder Geraden erzielbar.

Die Erfindung wird nachfolgend anhand bevorzugter Ausführungsformen unter Bezugnahme auf die Zeichnung beschrieben. In der Zeichnung zeigen:
- Fig. 1: einen Längsschnitt durch ein Kugelgelenk gemäß einer ersten Ausführungsform,
- Fig. 2: einen Längsschnitt durch ein Kugelgelenk gemäß einer zweiten Ausführungsform,
- Fig. 3: einen Längsschnitt durch ein Kugelgelenk gemäß einer dritten Ausführungsform,
- Fig. 4: einen Längsschnitt durch ein Kugelgelenk gemäß einer vierten Ausführungsform,
- Fig. 5: eine Draufsicht auf einen Elastomerkörper des Kugelgelenks gemäß der vierten Ausführungsform,
- Fig. 6: eine Draufsicht auf einen Elastomerkörper des Kugelgelenks gemäß einer ersten Variante der vierten Ausführungsform,
- Fig. 7: eine Draufsicht auf einen Elastomerkörper des Kugelgelenks gemäß einer zweiten Variante der vierten Ausführungsform,
- Fig. 8: eine Draufsicht auf einen Elastomerkörper des Kugelgelenks gemäß einer dritten Variante der vierten Ausführungsform,
- Fig. 9: einen Längsschnitt durch ein Kugelgelenk gemäß einer fünften Ausführungsform,
- Fig. 10: eine Draufsicht auf einen Elastomerkörper des Kugelgelenks gemäß der fünften Ausführungsform,
- Fig. 11: eine Draufsicht auf einen Elastomerkörper des Kugelgelenks gemäß einer Variante der fünften Ausführungsform,
- Fig. 12: einen Längsschnitt durch ein Kugelgelenk gemäß einer sechsten Ausführungsform und
- Fig. 13: eine perspektivische Ansicht eines Elastomerkörpers und einer Gelenckugel des Kugelgelenks gemäß der sechsten Ausführungsform.

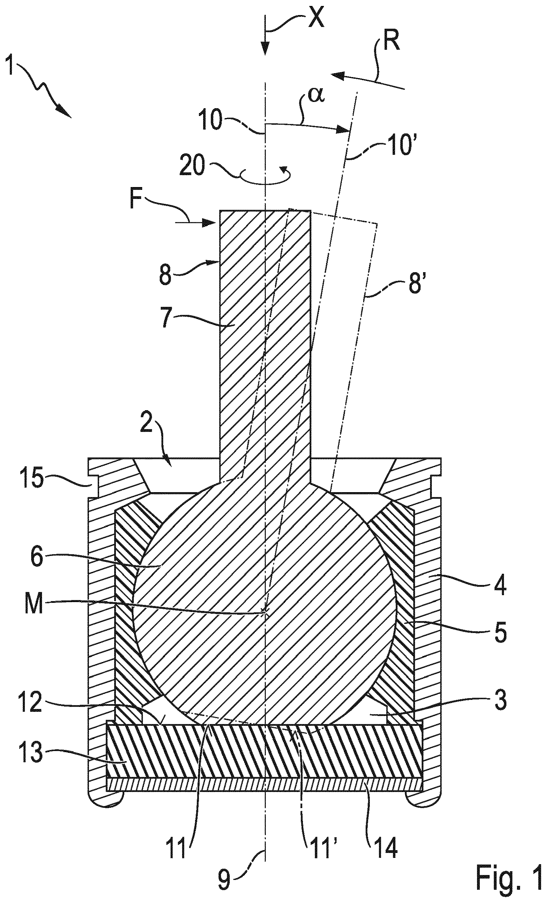

Aus Fig. 1 ist ein Längsschnitt durch ein Kugelgelenk 1 gemäß einer ersten Ausführungsform ersichtlich, welches ein eine Zapfenöffnung 2 und einen Innenraum 3 umfassendes Gehäuse 4, eine in dem Innenraum 3 angeordnete Lagerschale 5 und einen eine Gelenkkugel 6 und einen starr mit dieser verbundenen Zapfen 7 umfassenden Kugelzapfen 8 aufweist, der mit seiner Gelenkkugel 6 gleitfähig in der Lagerschale 5 gelagert ist und sich durch die Zapfenöffnung 2 hindurch aus dem Gehäuse 4 heraus erstreckt, relativ zu welchem der Kugelzapfen 8 auslenkbar ist. Der Kugelzapfen ist ferner in einer ausgelenkten Stellung dargestellt, wobei der ausgelenkte Kugelzapfen gestrichelt dargestellt und mit dem Bezugszeichen 8' bezeichnet ist. Der Mittelpunkt der Gelenkkugel 6 ist mit dem Bezugszeichen M bezeichnet.

Dem Kugelgelenk 1 und/oder dem Gehäuse 4 ist eine sich in einer axialen Richtung x erstreckende Gelenklängsachse 9 zugeordnet, die durch den Mittelpunkt M der Gelenkkugel 6 verläuft. Ferner ist dem Kugelzapfen 8 eine durch den Mittelpunkt M der Gelenkkugel 6 verlaufende Zapfenlängsachse 10 zugeordnet, bezüglich welcher der Kugelzapfen 8 rotationssymmetrisch ist. Die Zapfenlängsachse des ausgelenkten Kugelzapfens 8' ist dabei mit dem Bezugszeichen 10' bezeichnet. Der Kugelzapfen 8 ist in einem nicht ausgelenkten Zustand dargestellt, sodass die Zapfenlängsachse 10 mit der Gelenklängsachse 9 zusammenfällt. Diese nicht ausgelenkte Stellung des Kugelzapfens 8 wird auch als Nulllage bezeichnet. Die Zapfenlängsachse 10' des ausgelenkten Kugelzapfens 8' schließt mit Gelenklängsachse 9 hingegen einen Winkel α ein und schneidet die Gelenklängsachse 9 im Mittelpunkt M der Gelenkkugel.

An ihrer dem Zapfen 7 abgewandten Seite weist die Gelenkkugel 6 eine abgeflachte Polfläche 11 auf, die an einer Oberfläche 12 eines Elastomerkörpers 13 anliegt, der in axialer Richtung x zwischen der Gelenkkugel 6 und einem Boden 14 des Gehäuses 4 angeordnet ist, der durch einen fest mit dem Gehäuse 4 verbundenen Verschlussdeckel gebildet ist. Der Elastomerkörper 13 ist scheibenförmig ausgebildet und liegt auf seiner der Oberfläche 12 abgewandten Seite an dem Boden 14 an. Durch eine Auslenkung des Kugelzapfens wird die Polfläche bereichsweise gegen den Elastomerkörper 13 gedrückt, sodass sich dieser elastisch verformt. Die Polfläche des ausgelenkten Kugelzapfens 8' ist mit dem Bezugszeichen 11' bezeichnet. Durch die elastische Verformung des Elastomerkörpers 13 übt dieser auf den ausgelenkten Kugelzapfen 8' ein Rückstellmoment R aus, welches den Kugelzapfen zurück in die Nulllage drängt, die hier auch als Neutralstellung des Kugelzapfens bezeichnet wird. Da zum Auslenken des Kugelzapfens 8 auf diesen eine äußere Kraft F wirkt, wird bei Wegfall dieser äußeren Kraft F der Kugelzapfen durch den Elastomerkörper 13 in die Nulllage oder Neutralstellung zurückgestellt. Bevorzugt ist der Kugelzapfen 8, insbesondere in oder zumindest in der Nulllage, um seine Zapfenlängsachse 10 frei drehbar. Eine Drehung des Kugelzapfens 8 um die Zapfenlängsachse 10 ist dabei durch den Pfeil 20 angedeutet.

Ergänzend wird darauf hingewiesen, dass das Gelenkgehäuse 4 im Bereich der Zapfenöffnung 2 an seinem Außenumfang eine ringförmige Balgnut 15 aufweist, in oder an welcher ein das Gehäuse 4 umringender Dichtungsbalg festgelegt werden kann, der sich von dem Gehäuse 4 bis zu dem Zapfen 7 des Kugelzapfens 8 erstreckt, dessen Zapfen 7 sich durch den Dichtungsbalg hindurch erstreckt. Der Dichtungsbalg wirkt insbesondere einem Eindringen von Schmutz und Feuchtigkeit in den Innenraum 3 des Gehäuses 4 entgegen. In Fig. 1 ist der Dichtungsbalg nicht dargestellt.

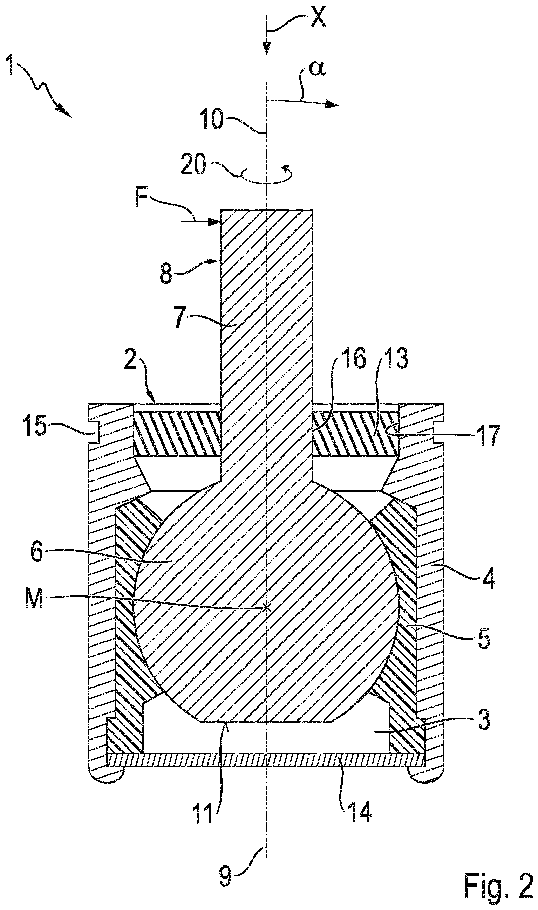

Aus Fig. 2 ist ein Längsschnitt durch ein Kugelgelenk 1 gemäß einer zweiten Ausführungsform ersichtlich, wobei zu der ersten Ausführungsform identische oder ähnliche Merkmale mit denselben Bezugszeichen wie bei der ersten Ausführungsform bezeichnet sind.

Das Kugelgelenk 1 gemäß der zweiten Ausführungsform weist ein eine Zapfenöffnung 2 und einen Innenraum 3 umfassendes Gehäuse 4, eine in dem Innenraum 3 angeordnete Lagerschale 5 und einen eine Gelenkkugel 6 und einen starr mit dieser verbundenen Zapfen 7 umfassenden Kugelzapfen 8 auf, der mit seiner Gelenkkugel 6 gleitfähig in der Lagerschale 5 gelagert ist und sich durch die Zapfenöffnung 2 hindurch aus dem Gehäuse 4 heraus erstreckt, relativ zu welchem der Kugelzapfen 8 auslenkbar ist. Der Mittelpunkt der Gelenkkugel 6 ist mit dem Bezugszeichen M bezeichnet.

Dem Kugelgelenk 1 und/oder dem Gehäuse 4 ist eine sich in einer axialen Richtung x erstreckende Gelenklängsachse 9 zugeordnet, die durch den Mittelpunkt M der Gelenkkugel 6 verläuft. Ferner ist dem Kugelzapfen 8 eine durch den Mittelpunkt M der Gelenkkugel 6 verlaufende Zapfenlängsachse 10 zugeordnet, bezüglich welcher der Kugelzapfen 8 rotationssymmetrisch ist. Der Kugelzapfen 8 ist in einem nicht ausgelenkten Zustand dargestellt, sodass die Zapfenlängsachse 10 mit der Gelenklängsachse 9 zusammenfällt. Diese nicht ausgelenkte Stellung des Kugelzapfens 8 wird auch als Nulllage bezeichnet. Ferner weist die Gelenkkugel 6 an ihrer dem Zapfen 7 abgewandten Seite eine abgeflachte Polfläche 11 auf. Gemäß einer möglichen Alternative ist die Polfläche nicht abgeflacht, sondern bildet einen Teil der Kugelfläche der Gelenkkugel 6. Das Gehäuse 4 ist auf einer der Zapfenöffnung 2 gegenüberliegenden Seite durch einen Verschlussdeckel verschlossen, der einen Boden 14 des Gehäuses bildet. Eine oder jedwede quer zur Gelenklängsachse 9 verlaufende Richtung wird insbesondere als radiale Richtung bezeichnet.

Im Bereich der Zapfenöffnung 2 ist in dem Gehäuse 4 ein Elastomerkörper 13 in Form einer Ringscheibe angeordnet, durch dessen Ringöffnung 16 sich der Kugelzapfen 8 mit seinem Zapfen 7 hindurch erstreckt. Der Elastomerkörper 13 erstreckt sich von dem Zapfen 7 in radialer Richtung bis zu einer die Zapfenöffnung 2 begrenzenden Wandung 17 des Gehäuses 4 und liegt sowohl an dem Zapfen 7 als auch an der Wandung 17 an. Bevorzugt ist die Umfangskontur der Ringöffnung 16 an die Umfangskontur des Zapfens 7 angepasst oder näherungsweise angepasst. Alternativ ist die Ringöffnung z.B. als Langloch ausgebildet.

Durch eine Auslenkung des Kugelzapfens 8 in Richtung des Pfeils α wird der Zapfen 7 bereichsweise gegen den Elastomerkörper 13 gedrückt, sodass sich dieser elastisch verformt. Durch die elastische Verformung des Elastomerkörpers 13 übt dieser auf den ausgelenkten Kugelzapfen ein Rückstellmoment aus, welches den Kugelzapfen zurück in die Nulllage drängt, die hier auch als Neutralstellung des Kugelzapfens bezeichnet wird. Da zum Auslenken des Kugelzapfens 8 auf diesen eine äußere Kraft F wirkt, wird bei Wegfall dieser äußeren Kraft F der Kugelzapfen durch den Elastomerkörper 13 in die Nulllage oder Neutralstellung zurückgestellt. Bevorzugt ist der Kugelzapfen 8, insbesondere in oder zumindest in der Nulllage, um seine Zapfenlängsachse 10 frei drehbar. Eine Drehung des Kugelzapfens 8 um die Zapfenlängsachse 10 ist dabei durch den Pfeil 20 angedeutet.

Ergänzend wird darauf hingewiesen, dass das Gelenkgehäuse 4 im Bereich der Zapfenöffnung 2 an seinem Außenumfang eine ringförmige Balgnut 15 aufweist, in oder an welcher ein das Gehäuse 4 umringender Dichtungsbalg festgelegt werden kann, der sich von dem Gehäuse 4 bis zu dem Zapfen 7 des Kugelzapfens 8 erstreckt, dessen Zapfen 7 sich durch den Dichtungsbalg hindurch erstreckt. In Fig. 2 ist der Dichtungsbalg nicht dargestellt.

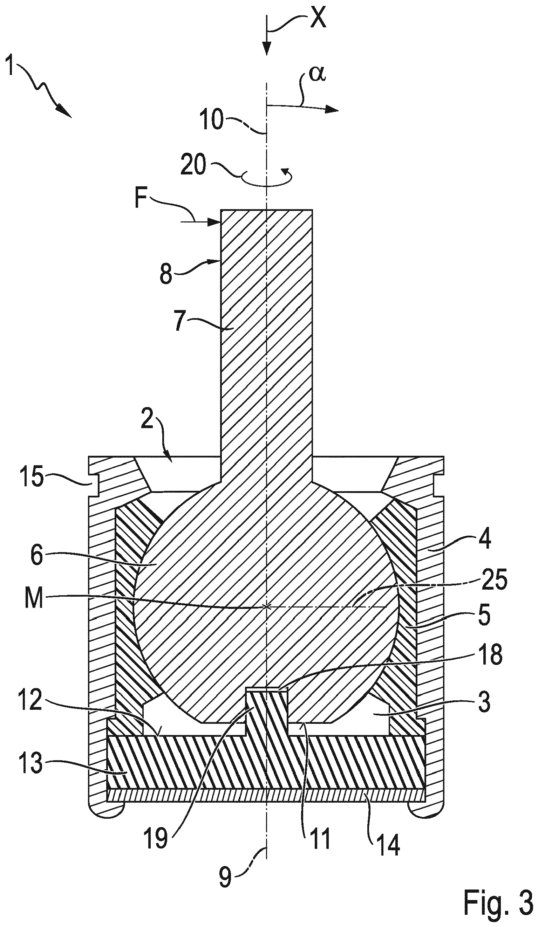

Aus Fig. 3 ist ein Längsschnitt durch ein Kugelgelenk 1 gemäß einer dritten Ausführungsform ersichtlich, wobei zu den vorherigen Ausführungsformen identische oder ähnliche Merkmale mit denselben Bezugszeichen wie bei den vorherigen Ausführungsformen bezeichnet sind.

Das Kugelgelenk 1 gemäß der dritten Ausführungsform weist ein eine Zapfenöffnung 2 und einen Innenraum 3 umfassendes Gehäuse 4, eine in dem Innenraum 3 angeordnete Lagerschale 5 und einen eine Gelenkkugel 6 und einen starr mit dieser verbundenen Zapfen 7 umfassenden Kugelzapfen 8 auf, der mit seiner Gelenkkugel 6 gleitfähig in der Lagerschale 5 gelagert ist und sich durch die Zapfenöffnung 2 hindurch aus dem Gehäuse 4 heraus erstreckt, relativ zu welchem der Kugelzapfen 8 auslenkbar ist. Der Mittelpunkt der Gelenkkugel 6 ist mit dem Bezugszeichen M bezeichnet.

Dem Kugelgelenk 1 und/oder dem Gehäuse 4 ist eine sich in einer axialen Richtung x erstreckende Gelenklängsachse 9 zugeordnet, die durch den Mittelpunkt M der Gelenkkugel 6 verläuft. Ferner ist dem Kugelzapfen 8 eine durch den Mittelpunkt M der Gelenkkugel 6 verlaufende Zapfenlängsachse 10 zugeordnet, bezüglich welcher der Kugelzapfen 8 rotationssymmetrisch ist. Der Kugelzapfen 8 ist in einem nicht ausgelenkten Zustand dargestellt, sodass die Zapfenlängsachse 10 mit der Gelenklängsachse 9 zusammenfällt. Diese nicht ausgelenkte Stellung des Kugelzapfens 8 wird auch als Nulllage bezeichnet. Das Gehäuse 4 ist auf einer der Zapfenöffnung 2 gegenüberliegenden Seite durch einen Verschlussdeckel verschlossen, der einen Boden 14 des Gehäuses bildet.

Die Gelenkkugel 6 weist an ihrer dem Zapfen 7 abgewandten Seite eine abgeflachte Polfläche 11 auf. Gemäß einer möglichen Alternative ist die Polfläche nicht abgeflacht, sondern bildet einen Teil der Kugelfläche der Gelenkkugel 6. An der Polfläche 11 ist eine sich in Richtung der Zapfenlängsachse 10 in die Gelenkkugel 6 hinein erstreckende Ausnehmung 18 vorgesehen, durch welche die Zapfenlängsachse 10 insbesondere mittig hindurch verläuft. Ferner ist in axialer Richtung x zwischen der Gelenkkugel 6 und dem Boden 14 in dem Innenraum 3 ein, insbesondere scheibenförmiger, Elastomerkörper 13 angeordnet, der an seiner der Gelenkkugel 6 zugewandten Oberfläche 12 einen in Richtung der Gelenklängsachse 9 vorstehenden Vorsprung 19 aufweist, der in die Ausnehmung 18 eingreift. Die Gelenklängsachse 9 verläuft insbesondere mittig durch den Vorsprung 19. Der Vorsprung 19 ist durch das Material des Elastomerkörpers 13 gebildet und fest mit diesem verbunden. Ferner liegt der Elastomerkörper 13 mit seiner der Oberfläche 12 abgewandten Seite an dem Boden 14 an.

Durch eine Auslenkung des Kugelzapfens 8 in Richtung des Pfeils α wird der in die Ausnehmung 18 eingreifende Vorsprung 19 von dem Kugelzapfen 8 mitgenommen und somit der Elastomerkörper 13 elastisch verformt. Durch die elastische Verformung des Elastomerkörpers 13 übt dieser auf den ausgelenkten Kugelzapfen ein Rückstellmoment aus, welches den Kugelzapfen zurück in die Nulllage drängt, die hier auch als Neutralstellung des Kugelzapfens bezeichnet wird. Da zum Auslenken des Kugelzapfens 8 auf diesen eine äußere Kraft F wirkt, wird bei Wegfall dieser äußeren Kraft F der Kugelzapfen durch den Elastomerkörper 13 in die Nulllage oder Neutralstellung zurückgestellt.

Zwischen der Gelenkkugel 6 oder der Polfläche 11 und der Oberfläche 12 des Elastomerkörpers 13 ist ein axialer Abstand vorgesehen. Gemäß einer möglichen Alternative liegt die Gelenkkugel 6 mit ihrer Polfläche 11 an der Oberfläche 12 des Elastomerkörpers 13 an.

Die Ausnehmung 18 und der Vorsprung 19 sind jeweils kreiszylindrisch ausgebildet, wobei die Umfangskontur der Ausnehmung 18 insbesondere an die Umfangskontur des Vorsprungs 19 angepasst oder näherungsweise angepasst ist. Eine Auslenkung des Kugelzapfens 8 in einer beliebigen Richtung führt somit zu einer Verformung des Elastomerkörpers 13. Bevorzugt ist der Kugelzapfen 8, insbesondere in oder zumindest in der Nulllage, um seine Zapfenlängsachse 10 frei drehbar. Eine Drehung des Kugelzapfens 8 um die Zapfenlängsachse 10 ist dabei durch den Pfeil 20 angedeutet.

Gemäß einer ersten Variante sind die Ausnehmung 18 und der Vorsprung 19 jeweils quaderförmig ausgebildet, wobei die Umfangskontur der Ausnehmung 18 insbesondere an die Umfangskontur des Vorsprungs 19 angepasst oder näherungsweise angepasst ist. Eine Auslenkung des Kugelzapfens 8 in einer beliebigen Richtung führt somit zu einer Verformung des Elastomerkörpers 13. Ferner führt eine Drehung des Kugelzapfens 8 um die Zapfenlängsachse 10 zu einer Verformung des Elastomerkörpers 13. Da zum Drehen des Kugelzapfens 8 um die Zapfenlängsachse 10 auf diesen ein äußeres Drehmoment wirkt, wird bei Wegfall dieses äußeren Drehmoments der Kugelzapfen 8 durch den Elastomerkörper 13 in eine vorgegebene Drehstellung bezüglich der Zapfenlängsachse 10 zurückgedreht, die auch als Nullorientierung des Kugelzapfens 8 bezeichnet wird.

Gemäß einer zweiten Variante ist die Ausnehmung 18 als eine sich in einer Führungsrichtung erstreckende Nut ausgebildet, wobei die Führungsrichtung in Fig. 3 insbesondere senkrecht zur Zeichenebene verläuft. Vorteilhaft ist der Vorsprung 19 in der Nut in Führungsrichtung, insbesondere bewegbar, geführt. Die Nut wird z.B. auch als Führungsnut bezeichnet. Vorzugsweise ist der Nutgrund der Nut um eine durch den Mittelpunkt M der Gelenkkugel 6 und senkrecht zur Zapfenlängsachse 10 verlaufende Gerade 25 gekrümmt. Alternativ ist der Nutgrund z.B. eben ausgebildet. Vorteilhaft ist die Nutbreite der Nut an den Vorsprung 19, insbesondere an den Durchmesser und/oder die Breite des Vorsprungs 19, angepasst oder näherungsweise angepasst. Bevorzugt ist der Kugelzapfen 8 in Führungsrichtung frei auslenkbar. Eine Auslenkung des Kugelzapfens in eine andere Richtung als der Führungsrichtung, z.B. in einer zu der Führungsrichtung senkrechten Richtung, führt aber insbesondere zu einer elastischen Verformung des Elastomerkörpers 13 und somit zu einem auf den Kugelzapfen 8 wirkenden Rückstellmoment.

Ergänzend wird darauf hingewiesen, dass das Gelenkgehäuse 4 im Bereich der Zapfenöffnung 2 an seinem Außenumfang eine ringförmige Balgnut 15 aufweist, in oder an welcher ein das Gehäuse 4 umringender Dichtungsbalg festgelegt werden kann, der sich von dem Gehäuse 4 bis zu dem Zapfen 7 des Kugelzapfens 8 erstreckt, dessen Zapfen 7 sich durch den Dichtungsbalg hindurch erstreckt. In Fig. 3 ist der Dichtungsbalg nicht dargestellt.

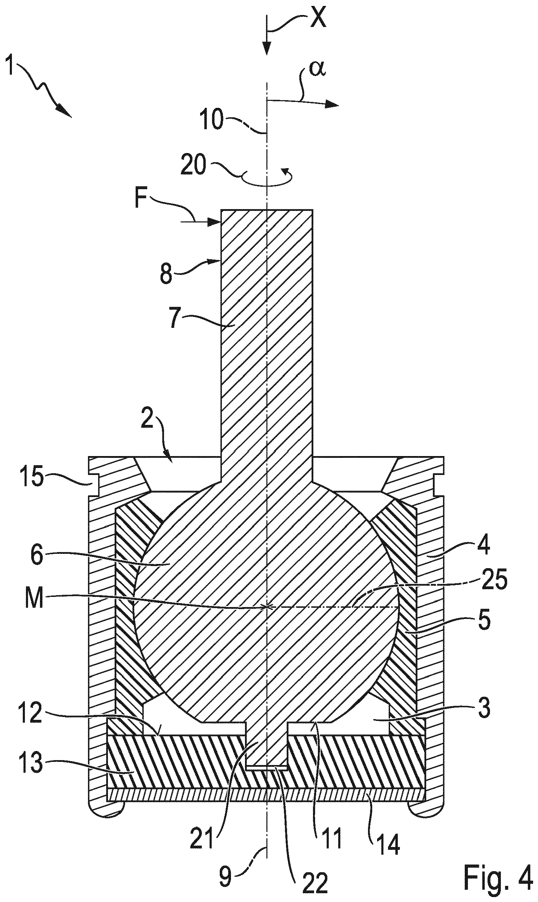

Aus Fig. 4 ist ein Längsschnitt durch ein Kugelgelenk 1 gemäß einer vierten Ausführungsform ersichtlich, wobei zu den vorherigen Ausführungsformen identische oder ähnliche Merkmale mit denselben Bezugszeichen wie bei den vorherigen Ausführungsformen bezeichnet sind.

Das Kugelgelenk 1 gemäß der vierten Ausführungsform weist ein eine Zapfenöffnung 2 und einen Innenraum 3 umfassendes Gehäuse 4, eine in dem Innenraum 3 angeordnete Lagerschale 5 und einen eine Gelenkkugel 6 und einen starr mit dieser verbundenen Zapfen 7 umfassenden Kugelzapfen 8 auf, der mit seiner Gelenkkugel 6 gleitfähig in der Lagerschale 5 gelagert ist und sich durch die Zapfenöffnung 2 hindurch aus dem Gehäuse 4 heraus erstreckt, relativ zu welchem der Kugelzapfen 8 auslenkbar ist. Der Mittelpunkt der Gelenkkugel 6 ist mit dem Bezugszeichen M bezeichnet.

Dem Kugelgelenk 1 und/oder dem Gehäuse 4 ist eine sich in einer axialen Richtung x erstreckende Gelenklängsachse 9 zugeordnet, die durch den Mittelpunkt M der Gelenkkugel 6 verläuft. Ferner ist dem Kugelzapfen 8 eine durch den Mittelpunkt M der Gelenkkugel 6 verlaufende Zapfenlängsachse 10 zugeordnet, bezüglich welcher der Kugelzapfen 8 rotationssymmetrisch ist. Der Kugelzapfen 8 ist in einem nicht ausgelenkten Zustand dargestellt, sodass die Zapfenlängsachse 10 mit der Gelenklängsachse 9 zusammenfällt. Diese nicht ausgelenkte Stellung des Kugelzapfens 8 wird auch als Nulllage bezeichnet. Das Gehäuse 4 ist auf einer der Zapfenöffnung 2 gegenüberliegenden Seite durch einen Verschlussdeckel verschlossen, der einen Boden 14 des Gehäuses bildet.

Die Gelenkkugel 6 weist an ihrer dem Zapfen 7 abgewandten Seite eine abgeflachte Polfläche 11 auf. Gemäß einer möglichen Alternative ist die Polfläche nicht abgeflacht, sondern bildet einen Teil der Kugelfläche der Gelenkkugel 6. An der Polfläche 11 ist ein in Richtung der Zapfenlängsachse 10 von der Gelenkkugel 6 vorstehender Vorsprung 21 vorgesehen, durch welche die Zapfenlängsachse 10 insbesondere mittig hindurch verläuft. Der Vorsprung 21 ist durch das Material des Kugelzapfens 8 gebildet und fest mit diesem verbunden. Ferner ist in axialer Richtung x zwischen der Gelenkkugel 6 und dem Boden 14 in dem Innenraum 3 ein, insbesondere scheibenförmiger, Elastomerkörper 13 angeordnet, an dessen der Gelenkkugel 6 zugewandten Oberfläche 12 eine sich Richtung der Gelenklängsachse 9 in den Elastomerkörper 3 hinein erstreckende Ausnehmung 22 vorgesehen ist, in welche der Vorsprung 21 eingreift. Die Gelenklängsachse 9 verläuft insbesondere mittig durch die Ausnehmung 22. Ferner liegt der Elastomerkörper 13 mit seiner der Oberfläche 12 abgewandten Seite an dem Boden 14 an.

Durch eine Auslenkung des Kugelzapfens 8 in Richtung des Pfeils α wird der Elastomerkörper 13 durch den in die Ausnehmung 22 eingreifenden Vorsprung 21 elastisch verformt. Durch die elastische Verformung des Elastomerkörpers 13 übt dieser auf den ausgelenkten Kugelzapfen ein Rückstellmoment aus, welches den Kugelzapfen zurück in die Nulllage drängt, die hier auch als Neutralstellung des Kugelzapfens bezeichnet wird. Da zum Auslenken des Kugelzapfens 8 auf diesen eine äußere Kraft F wirkt, wird bei Wegfall dieser äußeren Kraft F der Kugelzapfen durch den Elastomerkörper 13 in die Nulllage oder Neutralstellung zurückgestellt.

Zwischen der Gelenkkugel 6 oder der Polfläche 11 und der Oberfläche 12 des Elastomerkörpers 13 ist ein axialer Abstand vorgesehen. Gemäß einer möglichen Alternative liegt die Gelenkkugel 6 mit ihrer Polfläche 11 an der Oberfläche 12 des Elastomerkörpers 13 an.

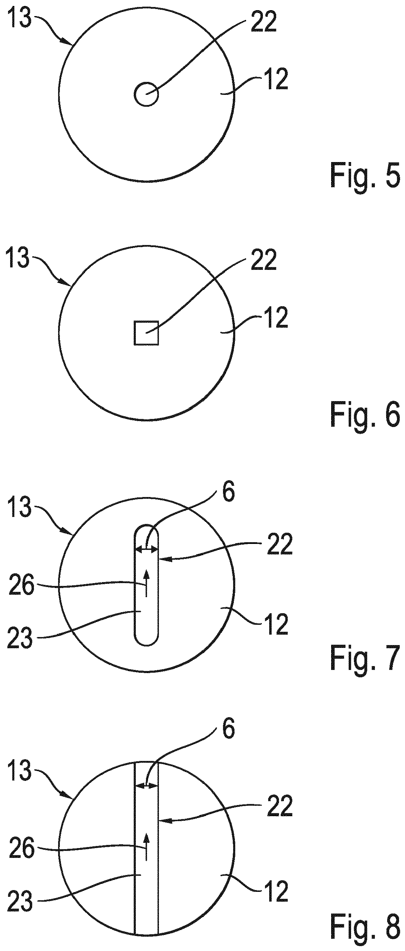

Eine Draufsicht auf den Elastomerkörper 13 ist aus Fig. 5 ersichtlich. Die Ausnehmung 22 und der Vorsprung 21 sind jeweils kreiszylindrisch ausgebildet, wobei die Umfangskontur der Ausnehmung 22 insbesondere an die Umfangskontur des Vorsprungs 21 angepasst oder näherungsweise angepasst ist. Eine Auslenkung des Kugelzapfens 8 in einer beliebigen Richtung führt somit zu einer Verformung des Elastomerkörpers 13. Bevorzugt ist der Kugelzapfen 8, insbesondere in oder zumindest in der Nulllage, um seine Zapfenlängsachse 10 frei drehbar. Eine Drehung des Kugelzapfens 8 um die Zapfenlängsachse 10 ist dabei in Fig. 4 durch den Pfeil 20 angedeutet.

Aus Fig. 6 ist eine Draufsicht auf den Elastomerkörper 13 gemäß einer ersten Variante ersichtlich. Gemäß der ersten Variante sind die Ausnehmung 22 und der Vorsprung 21 jeweils quaderförmig ausgebildet, wobei die Umfangskontur der Ausnehmung 22 insbesondere an die Umfangskontur des Vorsprungs 21 angepasst oder näherungsweise angepasst ist. Eine Auslenkung des Kugelzapfens 8 in einer beliebigen Richtung führt somit zu einer Verformung des Elastomerkörpers 13. Ferner führt eine Drehung des Kugelzapfens 8 um die Zapfenlängsachse 10 zu einer Verformung des Elastomerkörpers 13. Da zum Drehen des Kugelzapfens 8 um die Zapfenlängsachse 10 auf diesen ein äußeres Drehmoment wirkt, wird bei Wegfall dieses äußeren Drehmoments der Kugelzapfen 8 durch den Elastomerkörper 13 in eine vorgegebene Drehstellung bezüglich der Zapfenlängsachse 10 zurückgedreht, die auch als Nullorientierung des Kugelzapfens 8 bezeichnet wird.

Aus Fig. 7 ist eine Draufsicht auf den Elastomerkörper 13 gemäß einer zweiten Variante ersichtlich. Gemäß der zweiten Variante ist die Ausnehmung 22 als eine sich in einer Führungsrichtung 26 erstreckende Nut ausgebildet, wobei die Führungsrichtung 26 in Fig. 4 insbesondere senkrecht zur Zeichenebene verläuft. Vorteilhaft ist der Vorsprung 21 in der Nut in Führungsrichtung 26, insbesondere bewegbar, geführt. Die Nut wird z.B. auch als Führungsnut bezeichnet. Vorzugsweise ist der Nutgrund 23 der Nut um eine durch den Mittelpunkt M der Gelenkkugel 6 und senkrecht zur Zapfenlängsachse 10 verlaufende Gerade 25 gekrümmt. Alternativ ist der Nutgrund z.B. eben ausgebildet. Vorteilhaft ist die Nutbreite b der Nut an den Vorsprung 21, insbesondere an den Durchmesser und/oder die Breite des Vorsprungs 21, angepasst oder näherungsweise angepasst. Vorzugsweise ist die Nut derart dimensioniert und/oder lang, dass der Vorsprung 21 nicht gegen die Nutenden der Nut drücken kann, die insbesondere geschlossen sind. Bevorzugt ist der Kugelzapfen 8 in Führungsrichtung 26 frei auslenkbar. Eine Auslenkung des Kugelzapfens in eine andere Richtung als der Führungsrichtung 26, z.B. in einer zu der Führungsrichtung 26 senkrechten Richtung, führt insbesondere zu einer elastischen Verformung des Elastomerkörpers 13 und somit zu einem auf den Kugelzapfen 8 wirkenden Rückstellmoment.

Aus Fig. 8 ist eine Draufsicht auf den Elastomerkörper 13 gemäß einer dritten Variante ersichtlich. Gemäß der dritten Variante ist die Ausnehmung 22 als eine sich in einer Führungsrichtung 26 erstreckende Nut ausgebildet, wobei die Führungsrichtung 26 in Fig. 4 insbesondere senkrecht zur Zeichenebene verläuft. Vorteilhaft ist der Vorsprung 21 in der Nut in Führungsrichtung 26, insbesondere bewegbar, geführt. Die Nut wird z.B. auch als Führungsnut bezeichnet. Vorzugsweise ist der Nutgrund der Nut eben ausgebildet. Alternativ ist der Nutgrund 23 der Nut z.B. um eine durch den Mittelpunkt M der Gelenkkugel 6 und senkrecht zur Zapfenlängsachse 10 verlaufende Gerade 25 gekrümmt. Vorteilhaft ist die Nutbreite b der Nut an den Vorsprung 21, insbesondere an den Durchmesser und/oder die Breite des Vorsprungs 21, angepasst oder näherungsweise angepasst. Ferner ist die Nut in Führungsrichtung 26 an ihren Nutenden offen. Bevorzugt ist der Kugelzapfen 8 in Führungsrichtung 26 frei auslenkbar. Eine Auslenkung des Kugelzapfens in eine andere Richtung als der Führungsrichtung 26, z.B. in einer zu der Führungsrichtung senkrechten Richtung, führt insbesondere zu einer elastischen Verformung des Elastomerkörpers 13 und somit zu einem auf den Kugelzapfen 8 wirkenden Rückstellmoment.

Ergänzend wird darauf hingewiesen, dass das Gelenkgehäuse 4 im Bereich der Zapfenöffnung 2 an seinem Außenumfang eine ringförmige Balgnut 15 aufweist, in oder an welcher ein das Gehäuse 4 umringender Dichtungsbalg festgelegt werden kann, der sich von dem Gehäuse 4 bis zu dem Zapfen 7 des Kugelzapfens 8 erstreckt, dessen Zapfen 7 sich durch den Dichtungsbalg hindurch erstreckt. In Fig. 4 ist der Dichtungsbalg nicht dargestellt.

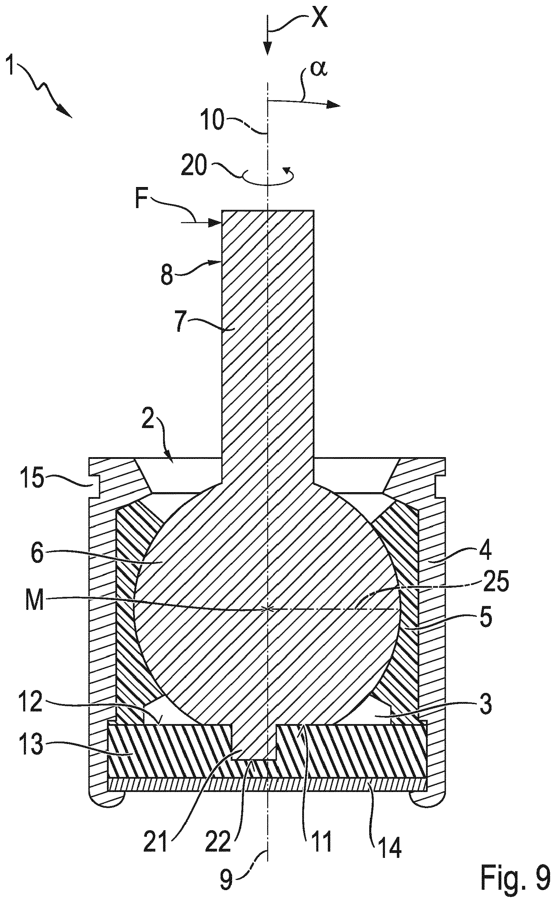

Aus Fig. 9 ist ein Längsschnitt durch ein Kugelgelenk 1 gemäß einer fünften Ausführungsform ersichtlich, wobei zu den vorherigen Ausführungsformen identische oder ähnliche Merkmale mit denselben Bezugszeichen wie bei den vorherigen Ausführungsformen bezeichnet sind.

Das Kugelgelenk 1 gemäß der fünften Ausführungsform weist ein eine Zapfenöffnung 2 und einen Innenraum 3 umfassendes Gehäuse 4, eine in dem Innenraum 3 angeordnete Lagerschale 5 und einen eine Gelenkkugel 6 und einen starr mit dieser verbundenen Zapfen 7 umfassenden Kugelzapfen 8 auf, der mit seiner Gelenkkugel 6 gleitfähig in der Lagerschale 5 gelagert ist und sich durch die Zapfenöffnung 2 hindurch aus dem Gehäuse 4 heraus erstreckt, relativ zu welchem der Kugelzapfen 8 auslenkbar ist. Der Mittelpunkt der Gelenkkugel 6 ist mit dem Bezugszeichen M bezeichnet.

Dem Kugelgelenk 1 und/oder dem Gehäuse 4 ist eine sich in einer axialen Richtung x erstreckende Gelenklängsachse 9 zugeordnet, die durch den Mittelpunkt M der Gelenkkugel 6 verläuft. Ferner ist dem Kugelzapfen 8 eine durch den Mittelpunkt M der Gelenkkugel 6 verlaufende Zapfenlängsachse 10 zugeordnet, bezüglich welcher der Kugelzapfen 8 rotationssymmetrisch ist. Der Kugelzapfen 8 ist in einem nicht ausgelenkten Zustand dargestellt, sodass die Zapfenlängsachse 10 mit der Gelenklängsachse 9 zusammenfällt. Diese nicht ausgelenkte Stellung des Kugelzapfens 8 wird auch als Nulllage bezeichnet. Das Gehäuse 4 ist auf einer der Zapfenöffnung 2 gegenüberliegenden Seite durch einen Verschlussdeckel verschlossen, der einen Boden 14 des Gehäuses bildet.

Die Gelenkkugel 6 weist an ihrer dem Zapfen 7 abgewandten Seite eine abgeflachte Polfläche 11 auf. Gemäß einer möglichen Alternative ist die Polfläche nicht abgeflacht, sondern bildet einen Teil der Kugelfläche der Gelenkkugel 6. An der Polfläche 11 ist ein in Richtung der Zapfenlängsachse 10 von der Gelenkkugel 6 vorstehender Vorsprung 21 vorgesehen, der vorzugsweise exzentrisch zu der Zapfenlängsachse 10 angeordnet ist, sodass diese insbesondere nicht oder nicht mittig durch den Vorsprung 21 verläuft. Der Vorsprung 21 ist durch das Material des Kugelzapfens 8 gebildet und fest mit diesem verbunden. Ferner ist in axialer Richtung x zwischen der Gelenkkugel 6 und dem Boden 14 in dem Innenraum 3 ein, insbesondere scheibenförmiger, Elastomerkörper 13 angeordnet, an dessen der Gelenkkugel 6 zugewandten Oberfläche 12 eine sich Richtung der Gelenklängsachse 9 in den Elastomerkörper 3 hinein erstreckende Ausnehmung 22 vorgesehen ist, in welche der Vorsprung 21 eingreift. Die Ausnehmung 22 ist vorzugsweise exzentrisch zu der Gehäuselängsachse 9 angeordnet, sodass diese insbesondere nicht oder nicht mittig durch die Ausnehmung 22 verläuft. Die Gelenkkugel 6 liegt mit ihrer Polfläche 11 an der Oberfläche 12 des Elastomerkörpers 13 an. Ferner liegt der Elastomerkörper 13 mit seiner der Oberfläche 12 abgewandten Seite an dem Boden 14 an.

Durch eine Auslenkung des Kugelzapfens 8 in Richtung des Pfeils α wird die Polfläche bereichsweise gegen den Elastomerkörper 13 gedrückt, sodass sich dieser elastisch verformt. Zusätzlich wird der Elastomerkörper 13 durch den in die Ausnehmung 22 eingreifenden Vorsprung 21 elastisch verformt. Durch die elastische Verformung des Elastomerkörpers 13 übt dieser auf den ausgelenkten Kugelzapfen ein Rückstellmoment aus, welches den Kugelzapfen zurück in die Nulllage drängt, die hier auch als Neutralstellung des Kugelzapfens bezeichnet wird. Da zum Auslenken des Kugelzapfens 8 auf diesen eine äußere Kraft F wirkt, wird bei Wegfall dieser äußeren Kraft F der Kugelzapfen durch den Elastomerkörper 13 in die Nulllage oder Neutralstellung zurückgestellt.

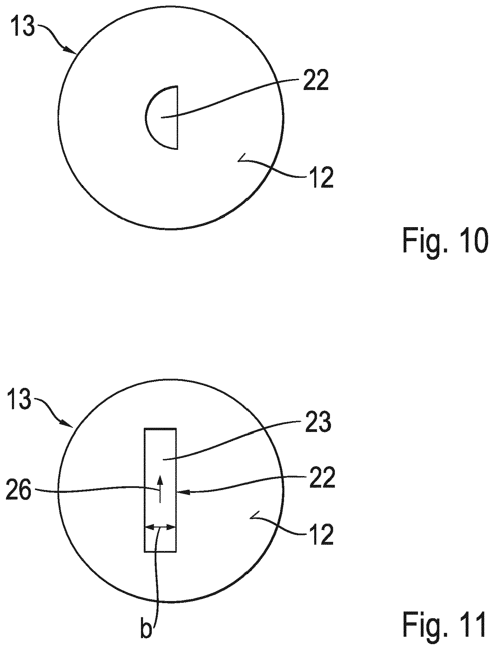

Eine Draufsicht auf den Elastomerkörper 13 ist aus Fig. 10 ersichtlich. Die Ausnehmung 22 und der Vorsprung 21 sind jeweils halbzylindrisch ausgebildet, wobei die Umfangskontur der Ausnehmung 22 insbesondere an die Umfangskontur des Vorsprungs 21 angepasst oder näherungsweise angepasst ist. Eine Drehung des Kugelzapfens 8 um die Zapfenlängsachse 10 führt, insbesondere aufgrund der zur Zapfenlängsachse 10 exzentrischen Anordnung des Vorsprungs 21, zu einer Verformung des Elastomerkörpers 13. Da zum Drehen des Kugelzapfens 8 um die Zapfenlängsachse 10 auf diesen ein äußeres Drehmoment wirkt, wird bei Wegfall dieses äußeren Drehmoments der Kugelzapfen 8 durch den Elastomerkörper 13 in eine vorgegebene Drehstellung bezüglich der Zapfenlängsachse 10 zurückgedreht, die auch als Nullorientierung des Kugelzapfens 8 bezeichnet wird. Durch die halbzylindrische Form der Ausnehmung 22 und des Vorsprungs 21 wird insbesondere erreicht, dass der durch den Vorsprung hervorgerufene Beitrag an der elastischen Verformung des Elastomerkörpers und somit auch das Rückstellmoment bei Auslenkungen des Kugelzapfens 8 in unterschiedlichen Richtungen unterschiedlich ist.

Aus Fig. 11 ist eine Draufsicht auf den Elastomerkörper 13 gemäß einer ersten Variante ersichtlich. Gemäß der ersten Variante ist die Ausnehmung 22 als eine sich in einer Führungsrichtung 26 erstreckende Nut ausgebildet, wobei die Führungsrichtung 26 in Fig. 9 insbesondere senkrecht zur Zeichenebene verläuft. Der Vorsprung ist z.B. kreiszylindrisch ausgebildet. Vorteilhaft ist der Vorsprung 21 in der Nut in Führungsrichtung 26 geführt. Die Nut wird z.B. auch als Führungsnut bezeichnet. Vorzugsweise ist der Nutgrund 23 der Nut um eine durch den Mittelpunkt M der Gelenckugel 6 und senkrecht zur Zapfenlängsachse 10 verlaufende Gerade 25 gekrümmt. Alternativ ist der Nutgrund z.B. eben ausgebildet. Vorteilhaft ist die Nutbreite b der Nut an den Vorsprung 21, insbesondere an den Durchmesser und/oder die Breite des Vorsprungs 21, angepasst oder näherungsweise angepasst. Eine Drehung des Kugelzapfens 8 um die Zapfenlängsachse 10 führt, insbesondere aufgrund der zur Zapfenlängsachse 10 exzentrischen Anordnung des Vorsprungs 21, zu einer Verformung des Elastomerkörpers 13. Da zum Drehen des Kugelzapfens 8 um die Zapfenlängsachse 10 auf diesen ein äußeres Drehmoment wirkt, wird bei Wegfall dieses äußeren Drehmoments der Kugelzapfen 8 durch den Elastomerkörper 13 in eine vorgegebene Drehstellung bezüglich der Zapfenlängsachse 10 zurückgedreht, die auch als Nullorientierung des Kugelzapfens 8 bezeichnet wird. Ferner wird bei einer Auslenkung des Kugelzapfens 8 in Führungsrichtung 26 der Elastomerkörper nicht zusätzlich durch den Vorsprung 21 verformt. Eine Auslenkung des Kugelzapfens 8 in Führungsrichtung 26 führt somit zu einem geringeren Rückstellmoment als eine Auslenkung des Kugelzapfens 8 in einer anderen Richtung, wie z.B. eine Auslenkung des Kugelzapfens 8 in Richtung des Pfeils α, die insbesondere senkrecht zur Führungsrichtung 26 verläuft.

Ergänzend wird darauf hingewiesen, dass das Gelenkgehäuse 4 im Bereich der Zapfenöffnung 2 an seinem Außenumfang eine ringförmige Balgnut 15 aufweist, in oder an welcher ein das Gehäuse 4 umringender Dichtungsbalg festgelegt werden kann, der sich von dem Gehäuse 4 bis zu dem Zapfen 7 des Kugelzapfens 8 erstreckt, dessen Zapfen 7 sich durch den Dichtungsbalg hindurch erstreckt. In Fig. 9 ist der Dichtungsbalg nicht dargestellt.

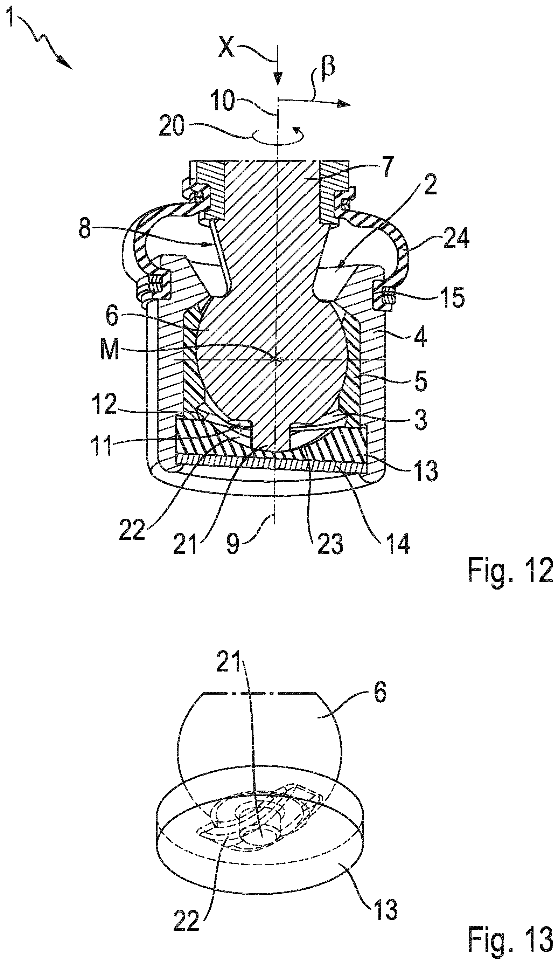

Aus Fig. 12 ist ein Längsschnitt durch ein Kugelgelenk 1 gemäß einer sechsten Ausführungsform ersichtlich, wobei zu den vorherigen Ausführungsformen identische oder ähnliche Merkmale mit denselben Bezugszeichen wie bei den vorherigen Ausführungsformen bezeichnet sind.

Das Kugelgelenk 1 gemäß der sechsten Ausführungsform entspricht dem in Fig. 4 dargestellten Kugelgelenk gemäß der vierten Ausführungsform mit dem in Fig. 7 dargestellten Elastomerkörper 13 gemäß der zweiten Variante der vierten Ausführungsform, wobei die Ansicht des Kugelgelenks 1 in Fig. 12 gegenüber der Ansicht in Fig. 4 um 90° um die Gelenklängsachse 9 gedreht ist. Zur Beschreibung der sechsten Ausführungsform wird auf die Beschreibung der vierten Ausführungsform unter Berücksichtigung des Elastomerkörpers 13 gemäß der zweiten Variante verwiesen. Ergänzend zeigt Fig. 14 eine perspektivische Ansicht des Elastomerkörpers 13 und der Gelenkkugel 6 des Kugelgelenks 1 gemäß der sechsten Ausführungsform.

Aus den Fig. 12 und 13 ist ersichtlich, dass der Vorsprung 21 kreiszylindrisch ausgebildet ist. Ferner ist erkennbar, dass der Nutgrund 23 gekrümmt ist. Auch ist in Fig. 12 der Dichtungsbalg 24 gezeigt. Ergänzend ist in Fig. 12 eine Auslenkung des Kugelzapfens in Führungsrichtung durch den Pfeil β angedeutet.

### Bezugszeichen

- 1: Kugelgelenk
- 2: Zapfenöffnung des Gehäuses
- 3: Innenraum des Gehäuses
- 4: Gehäuse
- 5: Lagerschale
- 6: Zapfen des Kugelzapfens
- 7: Gelenkkugel des Kugelzapfens
- 8: Kugelzapfen
- 8': ausgelenkter Kugelzapfen
- 9: Gelenklängsachse
- 10: Zapfenlängsachse
- 10': Zapfenlängsachse des ausgelenkten Kugelzapfens
- 11: Polfläche der Gelenkkugel
- 11': Polfläche der Gelenkkugel des ausgelenkten Kugelzapfens
- 12: Oberfläche des Elastomerkörpers
- 13: Elastomerkörper
- 14: Boden des Gehäuses / Verschlussdeckel
- 15: Balgnut
- 16: Ringöffnung
- 17: Wandung des Gehäuses, welche die Zapfenöffnung begrenzt
- 18: Ausnehmung in der Gelenkkugel
- 19: Vorsprung des Elastomerkörpers
- 20: Drehung des Kugelzapfens um die Zapfenlängsachse
- 21: Vorsprung der Gelenkkugel
- 22: Ausnehmung im Elastomerkörper
- 23: Nutgrund
- 24: Dichtungsbalg
- 25: Gerade
- 26: Führungsrichtung
- b: Nutbreite
- F: äußere Kraft
- M: Mittelpunkt der Gelenkkugel
- R: Rückstellmoment
- x: axiale Richtung
- α: Winkel / Auslenkung
- β: Auslenkung in Führungsrichtung

## Patentansprüche

1. Kugelgelenk mit einem eine Zapfenöffnung (2) und einen Innenraum (3) umfassenden Gehäuse (4) und einem eine Gelenkkugel (6) und einen fest mit dieser verbundenen Zapfen (7) umfassenden Kugelzapfen (8), dessen Gelenkkugel (6) drehbeweglich in dem Innenraum (3) des Gehäuses (4) gelagert ist, durch dessen Zapfenöffnung (2) sich der Kugelzapfen (8) aus dem Gehäuse (4) heraus erstreckt, **gekennzeichnet durch** einen zwischen dem Gehäuse (4) und dem Kugelzapfen (8) angeordneten und sowohl an dem Gehäuse (4) als auch an dem Kugelzapfen (8) abgestützten Elastomerkörper (13), der durch eine Bewegung des Kugelzapfens (8) relativ zu dem Gehäuse (4) elastisch verformbar ist.

2. Kugelgelenk nach Anspruch 1, **dadurch gekennzeichnet, dass** der Kugelzapfen (8) durch den elastisch verformten Elastomerkörper (13) in eine vorgegebene Stellung relativ zu dem Gehäuse (4) oder in einen vorgegebenen Bereich seines Bewegungsraumes zurückstellbar ist.

3. Kugelgelenk nach Anspruch 1 oder 2, **dadurch gekennzeichnet, dass** der Kugelzapfen (8) direkt an dem Elastomerkörper (13) anliegt.

4. Kugelgelenk nach einem der vorangehenden Ansprüche, **dadurch gekennzeichnet, dass** der Elastomerkörper (13) in dem Innenraum (3) zwischen dem Kugelzapfen (8) und einer den Innenraum (3) begrenzenden Wand des Gehäuses (4) angeordnet ist.

5. Kugelgelenk nach einem der vorangehenden Ansprüche, **dadurch gekennzeichnet, dass** der Elastomerkörper (13) in dem Innenraum (3) zwischen der Gelenkkugel (6) und einem der Zapfenöffnung (2) gegenüberliegenden Boden (14) des Gehäuses (4) angeordnet ist.

6. Kugelgelenk nach einem der vorangehenden Ansprüche, **dadurch gekennzeichnet, dass** die Gelenkkugel (6) auf einer dem Zapfen (7) abgewandten Seite (11) abgeflacht ist und mit dieser Seite an dem Elastomerkörper (13) anliegt.

7. Kugelgelenk nach einem der vorangehenden Ansprüche, **dadurch gekennzeichnet, dass** die Gelenkkugel (6) an der oder einer dem Zapfen (7) abgewandten Seite (11) einen Vorsprung (21) aufweist, der in eine in dem Elastomerkörper (13) vorgesehene Ausnehmung (22) eingreift.

8. Kugelgelenk nach einem der Ansprüche 1 bis 6, **dadurch gekennzeichnet, dass** die Gelenkkugel (6) an der oder einer dem Zapfen (7) abgewandten Seite (11) eine Ausnehmung (18) aufweist, in die ein an dem Elastomerkörper (13) vorgesehener Vorsprung (19) eingreift.

9. Kugelgelenk nach Anspruch 7 oder 8, **dadurch gekennzeichnet, dass** die Umfangskontur der Ausnehmung (18, 22) an die Umfangskontur des Vorsprungs (19, 21) angepasst oder näherungsweise angepasst ist.

10. Kugelgelenk nach Anspruch 9, **dadurch gekennzeichnet, dass** die Ausnehmung (18, 22) rund oder unrund ausgebildet ist.

11. Kugelgelenk nach Anspruch 7 oder 8, **dadurch gekennzeichnet, dass** die Ausnehmung (18, 22) als eine sich in einer Führungsrichtung (26) erstreckende Führungsnut ausgebildet ist, in welcher der Vorsprung (19, 21) in der Führungsrichtung geführt ist.

12. Kugelgelenk nach Anspruch 11, **dadurch gekennzeichnet, dass** die Führungsnut einen Nutgrund (23) aufweist, der um eine durch den Mittelpunkt (M) der Gelenkkugel (6) und senkrecht zu einer Zapfenlängsachse (10) des Kugelzapfens (8) verlaufende Gerade (25) gekrümmt ist.

13. Kugelgelenk nach einem der Ansprüche 7 bis 12, **dadurch gekennzeichnet, dass** der Vorsprung (21) exzentrisch zu der oder einer Zapfenlängsachse (10) des Kugelzapfens (8) angeordnet ist.

14. Kugelgelenk nach einem der Ansprüche 1 bis 4, **dadurch gekennzeichnet, dass** sich der Kugelzapfen (8) durch den Elastomerkörper (13) hindurch erstreckt, der zwischen dem Zapfen (7) und einer die Zapfenöffnung (2) begrenzenden Wandung (17) des Gehäuses (4) angeordnet ist.

15. Kugelgelenk nach einem der vorangehenden Ansprüche, **dadurch gekennzeichnet, dass** in dem Gehäuse (4) eine Lagerschale (5) angeordnet ist, in welcher der Kugelzapfen (8) mit seiner Gelenkkugel (6) gleitfähig sitzt.
